# EUROPÄISCHE PATENTSCHRIFT

(11) **EP 3 682 121 B1**
(45) Veröffentlichungstag und Bekanntmachung des Hinweises auf die Patenterteilung: **15.06.2022**
(21) Anmeldenummer: 18793593.7
(22) Anmeldetag: 15.10.2018
(51) Int. Cl.: F16B 5/01, F16B 37/04, F16B 37/12, B32B 3/08, B32B 3/12, B32B 3/30, B32B 5/02, B32B 5/12, B32B 5/24, B32B 7/12, B32B 5/18

(54) **VERFAHREN ZUR HERSTELLUNG EINES SANDWICHELEMENTS UND SANDWICHELEMENT**
METHOD FOR PRODUCING A SANDWICH ELEMENT, AND SANDWICH ELEMENT
PROCÉDÉ DE PRODUCTION D'UN ÉLÉMENT SANDWICH ET ÉLÉMENT SANDWICH

(30) Priorität: 15.11.2017 DE 102017220331
(43) Veröffentlichungstag der Anmeldung: 22.07.2020
(73) Patentinhaber: Siemens Mobility GmbH, 81739 München (DE)
(72) Erfinder: KARL, Michael, 91056 Erlangen (DE)
(86) Internationale Anmeldenummer: PCT/EP2018/077988
(87) Internationale Veröffentlichungsnummer: WO 2019/096510

(56) Entgegenhaltungen:
- EP-A1- 1 070 858
- EP-A1- 1 488 919
- WO-A1-2012/146283
- DE-A1- 2 729 066
- DE-A1-102004 013 147
- FR-A- 1 231 200
- FR-A1- 2 632 028
- GB-A- 973 559
- GB-A- 2 088 003
- US-A- 6 055 790
- US-A1- 2015 337 886

## Beschreibung

Die Erfindung betrifft ein Verfahren zur Herstellung eines Sandwichelements mit zumindest einer ersten Deckschicht, einer Kernschicht und einem Einleger, wobei in dem Sandwichelement eine Verbindungsfläche der Kernschicht mit einer Verbindungsfläche der Deckschicht verbunden ist sowie eine erste Fläche des Einlegers zumindest teilweise mit der Verbindungsfläche der Deckschicht verbunden ist und ein nach dem Verfahren hergestelltes Sandwichelement.

Ein solches Verfahren zur Herstellung eines Sandwichelements ist beispielsweiser aus der DE 27 29 066 A bekannt.

Zudem wird bisher wird bei einem solchen Verfahren eine passgenaue Aussparung in die Kernschicht eingebracht und der Einleger wird formschlüssig in die Aussparung eingelegt. Dabei bilden der Einleger und die Kernschicht eine gemeinsame Oberfläche, welche mit der Deckschicht verklebt wird.

Um eine möglichst haltbare Verbindung zu schaffen, ist es nötig, die erste Fläche des Einlegers, welche mit der Verbindungsfläche der Deckschicht verbunden ist, möglichst groß zu gestalten. Dies geht mit einer größeren Masse des Einlegers einher, was wiederum negative Auswirkungen auf das Gewicht des Sandwichbauteils hat.

Ein weiteres Problem ist, dass die Klebeverbindung zwischen dem Einleger und der Deckschicht trotz einer großen ersten Fläche des Einlegers durch an dem Einleger angreifenden Torsionskräften (z. B. beim An- oder Abschrauben eines Anbauteils) gelöst werden kann, weil die Klebeverbindung zwischen dem Einleger und der Deckschicht nur ungenügend robust gegen resultierende Scherkräfte ist.

Eine Aufgabe der Erfindung ist es, ein verbessertes Verfahren zur Herstellung eines Sandwichelements anzugeben, wobei der Einleger möglichst klein gehalten werden kann und wobei der Einleger möglichst fest in dem Sandwichelement verankert ist.

Die Aufgabe wird in dem in Anspruch 1 definierten Verfahren dadurch gelöst, dass die Kernschicht einen Schaum aufweist, bei welchem Verfahren
- zumindest in den Schaum der Kernschicht eine Aussparung eingebracht wird,
- der Einleger mit einem Abstand zum Schaum in der Aussparung positioniert wird, bei der Positionierung des Einlegers zumindest ein Abstandshalter zwischen dem Einleger und dem Schaum platziert wird und der Einleger zumindest eine Aussparung aufweist, in welche der Abstandshalter, insbesondere teilweise, eingelegt wird,
- in den Abstand aushärtbarer Klebstoff gefüllt wird, wobei der Klebstoff eine Schicht zwischen dem Einleger und dem Schaum bildet, und der Klebstoff aushärtet.

Der Klebstoff in dem Abstand, d. h. zwischen dem Einleger und dem Schaum, bewirkt zweckmäßigerweise eine bessere Verankerung des Einlegers in der Kernschicht. Aufgrund der Klebstoffschicht zwischen dem Einleger und dem Schaum kann der Einleger höhere Torsionskräfte aufnehmen, ohne sich dabei zu lösen.

Vorzugsweise wird der Einleger positioniert und dann wird in den Abstand der aushärtbare Klebstoff gefüllt.

Aufgrund des Abstands ist der Einleger zweckmäßigerweise nicht formschlüssig mit dem Schaum verbunden. Der Klebstoff in dem Abstand bildet eine Schicht, insbesondere eine Klebstoffschicht.

Vorzugsweise ist der Klebstoff ein chemisch härtender Klebstoff. Beispielsweise kann der Klebstoff ein Harz sein.

Vorzugsweise härtet der Klebstoff in einem Aushärteschritt aus. Der Aushärteschritt kann beispielsweise eine Temperaturerhöhung und/oder eine Druckerhöhung umfassen. In dem Aushärteschritt kann der Klebstoff polymerisieren. Die Polymerisation kann z. B. eine Kettenpolymerisation, eine Polyaddition oder eine Polykondensation sein. Weiter kann in dem Aushärteschritt ein Lösungsmittel entweichen.

Zweckmäßigerweise härtet der Klebstoff als Kunststoff, z. B. als Duroplast, aus. Der Kunststoff kann beispielsweise Polyester, Vinylester, Epoxid usw. sein.

Der Schaum kann ein Metallschaum sein, z. B. Aluminiumschaum. Vorzugsweise ist der Schaum ein Kunststoffschaum. Der Kunststoffschaum kann beispielsweise extrudiertes Polystyrol (XPS), Polyethylentherephthalat (PET), Polyurethanisocyanurat (PUR/PIR) und/oder Polyisocyanurat (PIR) usw. sein.

Vorzugsweise ist der Schaum ein geschlossenzelliger Schaum.

Es ist zweckmäßig, wenn der Einleger Seitenflächen aufweist, welche im Winkel zur ersten Fläche des Einlegers stehen. Vorzugsweise wird der Klebstoff zwischen den Seitenflächen des Einlegers und dem Schaum gefüllt.

Vorteilhafterweise umschließt der Klebstoff den Einleger an seinen Seitenflächen zumindest überwiegend. Weiter ist es vorteilhaft, wenn der Klebstoff den Einleger an seinen Seitenflächen zumindest im Wesentlichen umschließt. Auf diese Weise kann der Einleger, insbesondere die Seitenflächen des Einlegers, von dem Schaum zumindest überwiegend, insbesondere zumindest im Wesentlichen, durch den Klebstoff beabstandet sein.

Wenn der Klebstoff den Einleger an jeder seiner Seitenflächen jeweils zumindest überwiegend, insbesondere jeweils zumindest im Wesentlichen, umschließt, ist vorzugsweise gemeint, dass der Klebstoff zwischen jeder der Seitenflächen des Einlegers und dem Schaum gefüllt wird/ist. Auf diese Weise kann jede der Seitenflächen des Einlegers von dem Schaum zumindest überwiegend, insbesondere zumindest im Wesentlichen, durch den Klebstoff beabstandet sein.

Auf diese Weise kann der Klebstoff eine Zelle und/oder einen Käfig um die Seitenflächen des Einlegers bilden. Auf diese Weise kann eine besonders stabile Verankerung des Einlegers in der Kernschicht erreicht werden.

Als "überwiegend" kann dabei zu mindestens 50 % aufgefasst werden. Als "zumindest im Wesentlichen" kann dabei zu mindestens 80 %, vorzugsweise zu mindestens 90 %, aufgefasst werden. Der Klebstoff kann den Einleger an seinen Seitenflächen auch komplett umschließen.

Die Seitenflächen des Einlegers können beispielsweise als Mantelfläche ausgebildet sein.

Beispielsweise kann der Einleger auf der Form eines Prismas basieren. Weiter kann der Einleger auf der Form eines Zylinders basieren. Außerdem kann der Einleger auf der Form einer Pyramide oder eines Kegels basieren. Die zuvor genannte Mantelfläche kann eine Mantelfläche des Prismas, des Zylinders, der Pyramide bzw. des Kegels sein. Ferner kann die zuvor genannte erste Fläche eine Grundfläche des Prismas, des Zylinders, der Pyramide bzw. des Kegels sein. Das heißt, dass die Grundfläche beispielsweise auf einem Vieleck, auch Polygon, oder einem Kreis basieren kann.

Es ist zweckmäßig, wenn die Kernschicht eine Dickenrichtung aufweist. Vorzugsweise verläuft die Dickenrichtung der Kernschicht senkrecht zu der Verbindungsfläche der Deckschicht, insbesondere an demjenigen Bereich, in welchem der Einleger positioniert ist.

Der Einleger kann sich in der Dickenrichtung der Kernschicht durch einen Teil der Kernschicht erstrecken. Es ist bevorzugt, wenn sich der Einleger in der Dickenrichtung der Kernschicht durch die gesamte Kernschicht erstreckt.

Vorzugsweise bildet der Klebstoff in dem Abstand eine Schicht, auch Klebstoffschicht genannt. Es ist vorteilhaft, wenn die (Klebstoff-)Schicht mindestens 1,0 mm, insbesondere mindestens 2,0 mm, dick ist. Auf diese Weise kann eine besonders stabile Verankerung des Einlegers in der Kernschicht erreicht werden.

Es ist vorteilhaft, wenn die (Klebstoff-)Schicht zwischen 1,0 mm und 3,0 mm dick ist. Beispielsweise kann die (Klebstoff-)Schicht zwischen 2,0 mm und 3,0 mm dick sein. Vorteilhafterweise ist die (Klebstoff-)Schicht maximal 6,0 mm dick.

Gemäß der Erfindung wird bei der Positionierung des Einlegers zumindest ein Abstandshalter zwischen dem Einleger und dem Schaum platziert. Auf diese Weise kann zwischen dem Einleger und dem Schaum der Abstand gewährleistet werden.

Der Abstandshalter kann einteilig mit dem Einleger ausgeführt sein. Beispielsweise kann der Abstandshalter an dem Einleger angeklebt sein. Vorzugsweise ist der Einleger stoffschlüssig mit dem Einleger ausgeführt.

Auf diese Weise kann mittels des Abstandshalters eine Verzahnung des Einlegers mit dem Klebstoff in dem Abstand erreicht werden. Weiter kann auf diese Weise eine besonders stabile Verankerung des Einlegers in der Kernschicht erreicht werden.

Weiter kann der Abstandshalter einteilig, insbesondere stoffschlüssig, mit dem Schaum ausgeführt sein. Auf diese Weise kann mittels des Abstandshalters eine Verzahnung des Schaums mit dem Klebstoff in dem Abstand erreicht werden.

Vorzugsweise ist der Abstandshalter separat zu dem Einleger und zu dem Schaum.

Der Einleger weist zumindest eine Aussparung auf, die in zumindest einer der Seitenflächen des Einlegers platziert ist. Der Abstandshalter wird in die Aussparung des Einlegers, insbesondere teilweise, eingelegt. Auf diese Weise kann mittels des Abstandshalters eine Verzahnung des Einlegers mit der Kunststoffschicht erreicht werden.

Der Abstandshalter kann einen Kunststoff umfassen. Es ist bevorzugt, wenn der Abstandshalter aus einem Kunststoff ist. Weiter ist bevorzugt, wenn der Kunststoff mit dem ausgehärteten Klebstoff in dem Abstand einen Stoffschluss bildet. Insbesondere kann der Abstandshalter aus einem Kunststoff sein, welcher mit dem ausgehärteten Klebstoff in dem Abstand einen Stoffschluss bildet.

Es ist vorteilhaft, wenn der Abstandshalter an zumindest einer der Seitenflächen des Einlegers platziert ist. Vorzugsweise verläuft eine Längsrichtung des Abstandshalters in der Dickenrichtung der Kernschicht.

Auf diese Weise kann eine auf den Einleger wirkende Torsionskraft besser an die Kunststoffschicht weitergeleitet werden. Weiter kann auf diese Weise vermieden werden, dass sich der Einleger löst.

In einer bevorzugten Ausgestaltung der Erfindung ist der Schaum unter Verwendung von Ausnehmungen strukturiert. Die Ausnehmungen können gefüllt werden, beispielsweise mit einem Klebstoff. Zweckmäßigerweise werden die Ausnehmungen mit demselben, insbesondere aushärtbaren, Klebstoff gefüllt. Der Klebstoff in den Ausnehmungen kann, beispielsweise in dem zuvor genannten Aushärteschritt, aushärten. Durch die Füllung der Ausnehmungen mit Klebstoff kann eine Belastbarkeit der Kernschicht verbessert werden.

Die Ausnehmungen können beispielsweise eine hexagonale Struktur bilden. Weiter können die Ausnehmungen eine Struktur auf Basis einer hexagonalen Struktur bilden. Auf diese Weise kann eine besonders hohe Belastbarkeit gewährleistet werden.

Prinzipiell können die Ausnehmungen auch andere Strukturen bilden. Beispielsweise können die Ausnehmungen eine rechteckige Struktur bilden.

Vorteilhafterweise bildet der Klebstoff in den Ausnehmungen mit dem Klebstoff in dem Abstand eine stoffschlüssige Struktur. Das heißt, dass vorzugsweise der Klebstoff in den Ausnehmungen mit dem Klebstoff in dem Abstand einen Stoffschluss bildet. Auf diese Weise kann die Verankerung des Einlegers weiter verbessert werden. Insbesondere kann auf diese Weise eine Torsion des Klebstoffs in dem Abstand vermieden werden. Ferner können Torsionskräfte, welche auf den Einleger wirken, über den Klebstoff in dem Abstand in die Klebstoffstruktur in den Ausnehmungen geleitet werden. Auf diese Weise können die Kräfte besondere gut verteilt werden.

Die Verbindungsfläche der Kernschicht kann mit der Verbindungsfläche der Deckschicht unter Verwendung eines Klebstoffs verbunden werden. Der letztgenannte Klebstoff kann zu dem zuvor genannten Klebstoff kompatibel sein. Weiter kann der letztgenannte Klebstoff der zuvor genannte Klebstoff sein. Das heißt, dass die Verbindungsfläche der Kernschicht mit der Verbindungsfläche der Deckschicht unter Verwendung desselben Klebstoffs verbunden werden kann.

Außerdem ist es bevorzugt, wenn die erste Fläche des Einlegers unter Verwendung des zuletzt genannten Klebstoffs, insbesondere unter Verwendung desselben Klebstoffs, zumindest teilweise mit der Verbindungsfläche der Deckschicht verbunden wird. Insbesondere kann/können der zuletzt genannte Klebstoff zwischen der Kernschicht und der Deckschicht und/oder der zuletzt genannte Klebstoff zwischen dem Einleger und der Deckschicht einen Stoffschluss mit dem Klebstoff in dem Abstand bilden. Auf diese Weise kann eine stoffschlüssige Klebstoffstruktur gebildet werden. Ferner kann auf diese Weise eine besonders stabile Verankerung des Einlegers in der Kernschicht erreicht werden.

Die Deckschicht kann ein Fasermaterial umfassen. Es ist bevorzugt, wenn das Fasermaterial in denselben Klebstoff eingebettet ist oder wird. Insbesondere kann der letztgenannte Klebstoff, in welchen das Fasermaterial eingebettet ist oder wird, mit dem Klebstoff in dem Abstand einen Stoffschluss bilden. Auf diese Weise kann eine stoffschlüssige Klebstoffstruktur gebildet werden. Auf diese Weise kann eine besonders stabile Verankerung des Einlegers in der Kernschicht erreicht werden.

Als Fasermaterial kann ein Material verstanden werden, welches Fasern aufweist. Das Fasermaterial umfasst vorzugsweise Glasfasern und/oder Kohlenstofffasern. Prinzipiell kann das Fasermaterial auch andere Fasern aufweisen. Das Fasermaterial kann ein Gewebe, ein Gelege, ein Gewirk, ein Gestrick oder ein Filz sein.

Das Fasermaterial kann bereits vor einem Zusammenfügen mit der Kernschicht in dem Klebstoff eingebettet werden/sein. Insbesondere kann die Deckschicht in Form eines Prepreg-Materials vorliegen.

Ferner kann das Fasermaterial bei der Herstellung des Sandwichelements, insbesondere bei dem Zusammenfügen mit der Kernschicht, in dem aushärtbaren Klebstoff eingebettet werden. Der Klebstoff kann dann, insbesondere in dem zuvor genannten Aushärteschritt, aushärten.

Das im ausgehärteten Klebstoff eingebettete Fasermaterial bildet vorzugsweise einen faserverstärkten Kunststoff. Vorzugsweise ist der faserverstärkte Kunststoff ein kohlenstofffaserverstärkter Kunststoff und/oder ein glasfaserverstärkter Kunststoff.

Zur Herstellung des Sandwichelements können die Deckschicht, die Kernschicht und der Einleger in einem Werkzeug platziert werden. Außerdem kann eine weitere Schicht, insbesondere eine weitere Deckschicht, in dem Werkzeug platziert werden. Vorzugsweise wird der Klebstoff unter Verwendung eines Infusionsverfahrens in das Sandwichelement gefüllt. Beispielsweise kann der Klebstoff unter Verwendung eines Vakuum-Infusionsverfahrens in das Sandwichelement gefüllt werden. Weiter kann der Klebstoff unter Verwendung eines Spritzpress-Verfahrens, z. B. Rasin Transfer Moulding (RTM) oder Reaction Injejction Moulding (RIM), in das Sandwichelement gefüllt werden. Außerdem kann der Klebstoff unter Verwendung eines Autoklav-Prepreg-Verfahrens und/oder eines Handlaminat-Verfahrens in das Sandwichelement gefüllt werden.

Vorzugsweise verleiht das Werkzeug dem Sandwichelement seine Form. Das Sandwichelement kann eben oder gekrümmt sein. Insbesondere kann das Sandwichelement dreidimensional ausgeformt sein. Das heißt, dass das Sandwichelement ein Formteil sein kann.

Ferner ist die Erfindung gerichtet auf ein Sandwichelement nach Anspruch 9.

Um den Einleger möglichst fest in dem Sandwichelement zu verankern, wobei der Einleger möglichst klein zu halten ist, wird ein Sandwichelement der oben genannten Art vorgeschlagen, bei dem erfindungsgemäß zumindest der Schaum der Kernschicht eine Aussparung aufweist, der Einleger mit einem Abstand zum Schaum in der Aussparung positioniert ist und in den Abstand ausgehärteter Klebstoff platziert ist, wobei der Klebstoff eine Schicht zwischen dem Einleger und dem Schaum bildet.

Dieses Sandwichelement kann insbesondere das im oben beschriebenen Verfahren genannte Sandwichelement sein.

Gemäß der Erfindung ist in dem Abstand zumindest ein Abstandshalter angeordnet.

Es ist vorteilhaft, wenn der Abstandshalter stoffschlüssig mit dem ausgehärteten Klebstoff in dem Abstand ausgebildet ist.

Das Sandwichelement kann eine weitere Schicht, insbesondere eine weitere Deckschicht, aufweisen. Zweckmäßigerweise sind die Deckschicht und die weitere Schicht an einander abgewandten Seiten der Kernschicht angeordnet.

Der Einleger kann eine zweite Fläche aufweisen. Vorzugsweise sind die erste Fläche und die zweite Fläche des Einlegers einander abgewandt. Das heißt, dass die erste Fläche und die zweite Fläche des Einlegers gegenüberliegende Seiten des Einlegers sein können. Die zweite Fläche kann zumindest im Wesentlichen parallel zu der ersten Fläche des Einlegers verlaufen.

Es ist bevorzugt, wenn die zweite Fläche des Einlegers mit der weiteren Schicht verbunden, insbesondere verklebt, ist. Weiter kann die zweite Fläche des Einlegers mit der Kernschicht verbunden, insbesondere verklebt, sein.

Es ist bevorzugt, wenn der Einleger nicht rotationssymmetrisch ist. Der Einleger kann eine n-zählige Drehachse aufweisen.

Beispielsweise kann der Einleger auf der Form eines Prismas oder einer Pyramide basieren. Ferner kann die zuvor genannte erste Fläche eine Grundfläche des Prismas bzw. der Pyramide sein. Das heißt, dass die erste Fläche auf einem Vieleck, auch Polygon, basieren kann. Auf diese Weise kann eine Rotationssymmetrie des Einlegers verhindert werden.

Das Vieleck kann ein regelmäßiges Vieleck oder ein unregelmäßiges Vieleck sein. Beispielsweise kann das Vieleck ein Quadrat, ein Rechteck usw. sein.

Weiter kann der Einleger auf der Form eines Zylinders oder eines Kegels basieren. Der Einleger kann weiter zumindest eine Aussparung aufweisen, in welche vorzugsweise der Abstandshalter teilweise eingesetzt ist. Vorzugsweise ist die Aussparung an der Seitenfläche des Einlegers, insbesondere an der Mantelfläche des Einlegers, angeordnet. Zweckmäßigerweise ist die Aussparung derart angeordnet, dass eine Rotationssymmetrie des Einlegers unterbrochen bzw. verhindert werden kann.

Vorzugsweise ist der Abstandshalter an der Seitenfläche des Einlegers, insbesondere an der Mantelfläche des Einlegers, angeordnet. Zweckmäßigerweise ist der Abstandshalter derart angeordnet, dass eine Rotationssymmetrie des Einlegers unterbrochen bzw. verhindert werden kann.

Der Einleger kann eine Öffnung aufweisen. Vorzugsweise ist die Öffnung des Einlegers von außerhalb des Sandwichelements zugänglich.

Beispielsweise kann die Öffnung als Sackloch ausgeführt sein. Ferner kann die Öffnung als Durchgangsloch ausgeführt sein.

Die Öffnung kann ein Innengewinde aufweisen. Weiter kann in die Öffnung ein Gewindeeinsatz eingesetzt sein. Ferner kann in die Öffnung eine Gewindebolzen eingesetzt sein.

Vorzugsweise bildet die Öffnung einen Anbindepunkt, über welchen ein Anbauelement mit dem Sandwichelement verbunden werden kann.

Ein Anbauelement, insbesondere das zuvor genannte Anbauelement, kann mit dem Sandwichelement verbunden werden. Insbesondere kann das Anbauelement mit dem Einleger verbunden, insbesondere verschraubt, werden. Das Anbauelement und das Sandwichelement können ein Sandwichbauteil bilden.

Zweckmäßigerweise ist das Sandwichelement als Formteil ausgebildet. Vorzugsweise ist das Sandwichelement dreidimensional ausgeformt.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden. Insbesondere sind diese Merkmale jeweils einzeln und in beliebiger geeigneter Kombination mit dem erfindungsgemäßen Verfahren und des erfindungsgemäßen Sandwichelements kombinierbar. So sind Verfahrensmerkmale auch als Eigenschaft des entsprechenden Sandwichelements gegenständlich formuliert zu sehen und umgekehrt.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Die Ausführungsbeispiele dienen der Erläuterung der Erfindung und beschränken die Erfindung nicht auf die darin angegebene Kombination von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und mit einem beliebigen der Ansprüche kombiniert werden.

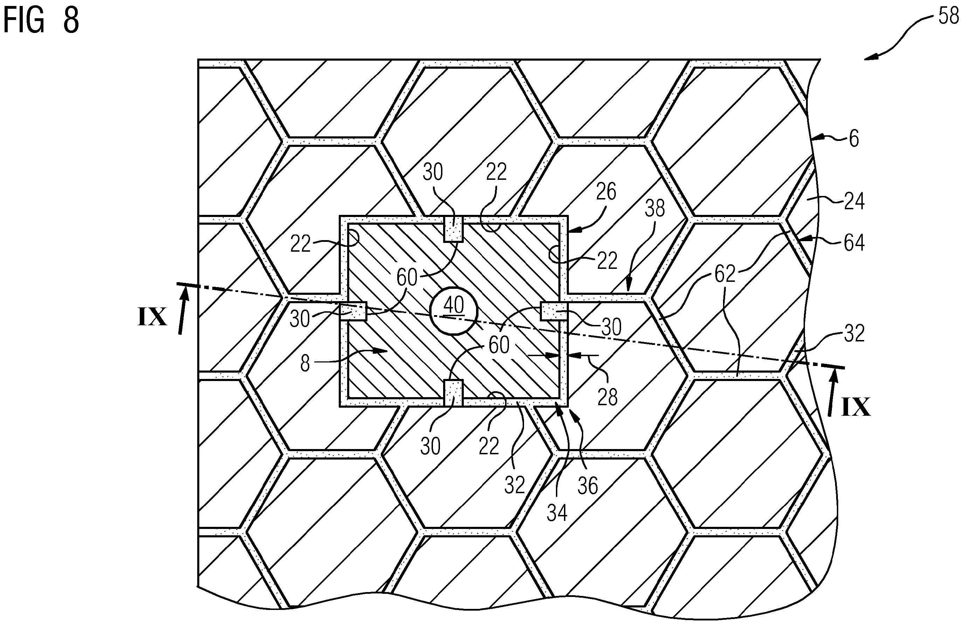

Nur Figur 8 zeigt ein erfindungsgemäßes Sandwichelement.

Es zeigen:
- FIG 1: einen Schnitt durch ein erstes Sandwichelement. In FIG 1 ist außerdem eine Schnittebene II-II sowie eine Schnittebene III-III dargestellt.
- FIG 2: einen Schnitt durch das Sandwichelement aus FIG 1 entlang der Schnittebene II-II,
- FIG 3: einen weiteren Schnitt durch das Sandwichelement aus FIG 1 entlang der Schnittebene III-III,
- FIG 4: Herstellung des Sandwichelements aus FIG 1,
- FIG 5: einen Schnitt durch ein zweites Sandwichelement,
- FIG 6: einen weiteren Schnitt durch das zweite Sandwichelement aus FIG 5 entlang der Schnittebene VI-VI,
- FIG 7: einen Schnitt durch ein drittes Sandwichelement,
- FIG 8: einen Schnitt durch ein viertes Sandwichelement mit einem Wabenschaum und
- FIG 9: einen weiteren Schnitt durch das vierte Sandwichelement aus FIG 8 entlang der Schnittebene IX-IX.

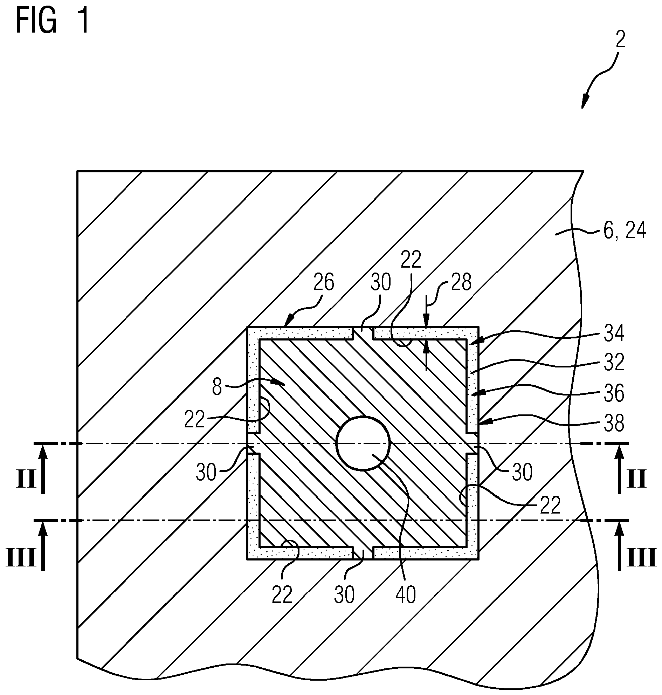

FIG 1 zeigt schematisch einen Schnitt durch ein erstes Sandwichelement 2. In FIG 1 sind außerdem eine Schnittebene II-II sowie eine Schnittebene III-III jeweils in Form einer Strich-Punkt-Linie dargestellt.

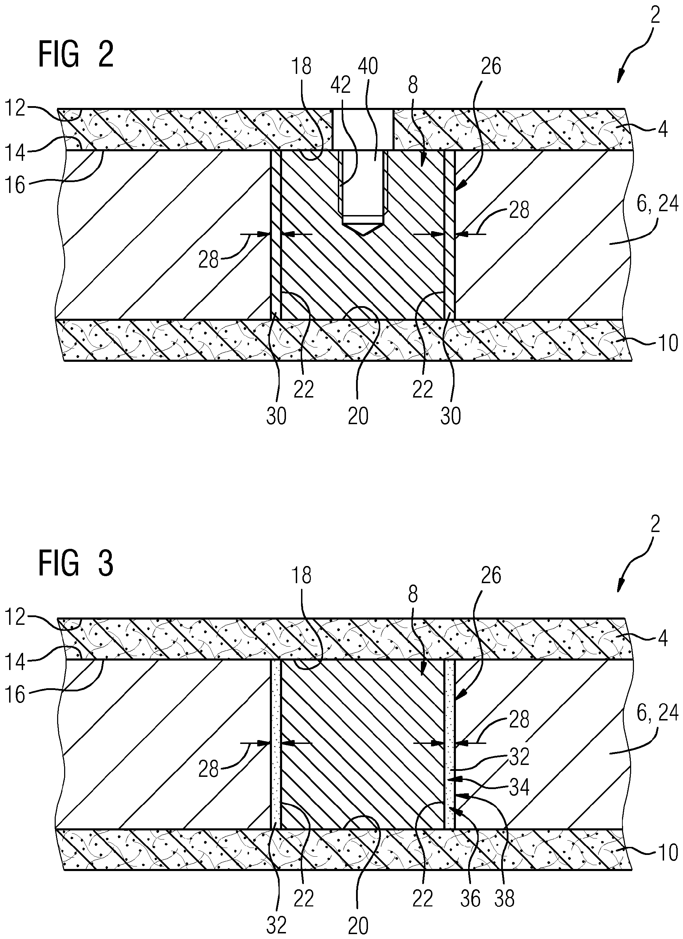

FIG 2 zeigt einen Schnitt durch das erste Sandwichelement 2 entlang der Schnittebene II-II. Außerdem zeigt FIG 3 einen Schnitt durch das erste Sandwichelement 2 entlang der

### Schnittebene III-III.

Das erste Sandwichelement 2 umfasst eine Deckschicht 4, eine Kernschicht 6 und einen Einleger 8. In diesem Beispiel umfasst das erste Sandwichelement 2 eine weitere Schicht 10, welche als weitere Deckschicht ausgebildet ist.

Das erste Sandwichelement 2 ist in Sandwichbauweise aufgebaut. In diesem Beispiel ist die Kernschicht 6 zwischen der Deckschicht 4 und der weiteren Schicht 10 angeordnet. Die Deckschicht 4 weist eine Außenfläche 12 auf, welche von der Kernschicht 6 abgewandt ist. Außerdem weist die Deckschicht 4 eine Verbindungsfläche 14 auf, welche der Kernschicht 6 zugewandt ist. Das heißt, dass die Außenfläche 12 und die Verbindungsfläche 14 der Deckschicht 4 einander abgewandt bzw. gegenüberliegend sind. Die Kernschicht 6 weist eine Verbindungsfläche 16 auf, welche der Deckschicht 4 zugewandt ist. Die Verbindungsfläche 14 der Deckschicht 4 ist mit der Verbindungsfläche 16 der Kernschicht 6 verbunden.

Der Einleger 8 weist eine erste Fläche 18 auf, welche zumindest teilweise mit der Verbindungsfläche 14 der Deckschicht 4 verbunden ist. Ferner umfasst der Einleger 8 eine zweite Fläche 20, welcher der ersten Fläche 18 gegenüberliegt.

In diesem Beispiel erstreckt sich der Einleger 8 in Dickenrichtung der Kernschicht 6 durch die gesamte Kernschicht 6. Die Dickenrichtung der Kernschicht 6 verläuft senkrecht zu der Verbindungsfläche 14 der Deckschicht 4. Außerdem ist als Dickenrichtung die Dickenrichtung in demjenigen Bereich gemeint, in welchem der Einleger 8 positioniert ist.

Insbesondere ist die zweite Fläche 20 des Einlegers 8 mit der weiteren Schicht 10 verbunden.

Außerdem weist der Einleger 8 mehrere Seitenflächen 22 auf, welche im Winkel zur ersten Fläche 18 des Einlegers 8 stehen. In diesem Beispiel basiert die Form des Einlegers 8 auf der Form eines Prismas. Die erste Fläche 18 des Einlegers 8 kann eine Grundfläche dieses Prismas sein, welche in diesem Beispiel auf der Form eines Vierecks basiert. Die zweite Fläche 20 ist in diesem Beispiel analog zu ersten Fläche 18 ausgebildet. Ferner sind die Seitenflächen 22 des Einlegers 8 als Mantelfläche des Prismas ausgebildet. Das Prisma hat in diesem Beispiel die Form eines Quaders.

In diesem Beispiel besteht der Einleger 8 aus einem metallischen Werkstoff.

Die Kernschicht 6 weist einen Schaum 24 auf. Zumindest der Schaum 24 der Kernschicht 6 weist wiederum eine Aussparung 26 auf. Der Einleger 8 ist mit einem Abstand 28 zum Schaum 24 in der Aussparung 26 positioniert. Um den Abstand 28 zu erzielen, sind in dem Abstand 28 Abstandshalter 30 angeordnet. In dem ersten Sandwichelement 2 sind die Abstandshalter 30 einteilig mit dem Einleger 8 ausgebildet. In diesem Beispiel sind die Abstandshalter 30 als Vorsprünge an den Seitenflächen 22 des Einlegers 8 ausgebildet. Die Längsrichtung der Abstandshalter 30 verläuft in der Dickenrichtung der Kernschicht 6.

In dem Ausführungsbeispiel sind in FIG 1 beispielhaft 4 Abstandshalter 30 gezeigt. Prinzipiell wäre auch eine andere Anzahl an Abstandshalter 30 denkbar.

In dem Abstand 28 ist ausgehärteter Klebstoff 32 platziert. Der Klebstoff 32 bildet eine Schicht 34 zwischen dem Einleger 8 und dem Schaum 24. Vorzugsweise ist die Klebstoffschicht 34 mindestens 1 mm dick.

Der Klebstoff 32 umschließt den Einleger 8 an seinen Seitenflächen 22 im Wesentlichen. Insbesondere ist der Klebstoff 32 zwischen jeder der Seitenflächen 22 des Einlegers 8 und dem Schaum 24 angeordnet. Auf diese Weise bildet der Klebstoff 32 eine Zelle beziehungsweise einen Käfig 36 um die Seitenflächen 22 des Einlegers 8. Auf diese Weise kann eine besonders stabile Verankerung des Einlegers 8 in der Kernschicht 6 erreicht werden.

Der ausgehärtete Klebstoff 32 bildet einen Kunststoff.

Die Deckschicht 4 (siehe FIG 2 und 3) und die weitere Schicht 10 sind in diesem Beispiel jeweils als faserverstärkter Kunststoff ausgebildet. Das heißt, dass die Deckschicht 4 und die weitere Schicht 10 jeweils ein Fasermaterial umfassen, welches jeweils in einen ausgehärteten Klebstoff, hier in denselben Klebstoff 32 wie der zuvor genannte, eingebettet ist. Der ausgehärtete Klebstoff der Deckschicht 4 sowie der weiteren Schicht 10 bilden einen Stoffschluss mit dem ausgehärteten Klebstoff 32 in dem Abstand 28. Auf diese Weise wird eine stoffschlüssige Klebstoffstruktur 38 gebildet.

Der Einleger 8 weist außerdem eine Öffnung 40 auf, welche von außerhalb des Sandwichselements 2 zugänglich ist. In diesem Beispiel ist die Öffnung 40 des Einlegers 8 eine Öffnung 40 des Sandwichselements 2, welche sich durch die Deckschicht 4 bis in den Einleger 8 erstreckt. Weiter ist die Öffnung 40 in diesem Beispiel als Sackloch ausgebildet.

Die Öffnung 40 des Einlegers 8 weist ein Innengewinde 42 auf. Auf diese Weise kann ein Anbauelement mit dem Sandwichelement 2 über eine Schraubverbindung verbunden werden.

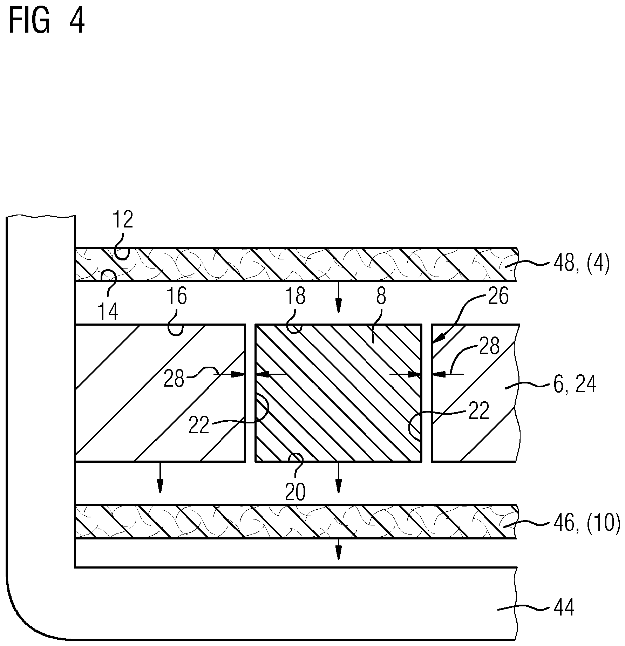

In FIG 4 ist schematisch die Herstellung des Sandwichelements 2 aus FIG 1 dargestellt. In den Schaum 24 der Kernschicht 6 wird eine Aussparung 26 eingebracht. Die Aussparung 26 kann beispielsweise unter Verwendung eines Cuttermessers und/oder unter Verwendung eines CNC-Cutters in den Schaum 24 eingebracht werden. Weiter ist es möglich, dass die Aussparung 26 durch Stanzen in den Schaum 24 eingebracht wird.

Die Herstellung des Sandwichelements 2 findet üblicherweise unter Verwendung eines Werkzeugs 44 statt. Für die weitere Schicht 10 wird ein Fasermaterial 46 in das Werkzeug 44 eingelegt. Dann wird die Kernschicht 6, welche den Schaum 24 aufweist, in das Werkzeug 44 eingelegt. Das heißt, die Kernschicht 6 wird auf das Fasermaterial 46 für die weitere Schicht 10 positioniert.

In der Aussparung 26 des Schaums 24 wird der Einleger 8 platziert. Dabei wird der Einleger 8 mit einem Abstand 28 zum Schaum 24 in der Aussparung 26 positioniert. Dieser Abstand 28 entsteht unter Verwendung der Abstandshalter 30 (analog der Figuren 1 bis 3).

Dann wird ein Fasermaterial 48 für die Deckschicht 4 in das Werkzeug 44 eingelegt. Das heißt, das Fasermatierial 48 für die Deckschicht 4 wird auf der Kernschicht 6 positioniert.

Das Einlegen, Platzieren und/oder Positionieren ist in FIG 4 schematisch jeweils als Pfeil dargestellt.

Dann wird das Werkzeug 44 geschlossen und aushärtbarer Klebstoff 32 wird in das Werkzeug 44 unter Verwendung eines Infusionsverfahrens eingefüllt (nicht dargestellt). Auf diese Weise füllt der Klebstoff 32 alle Hohlräume innerhalb des Werkzeugs 44 aus. Insbesondere wird der Klebstoff 32 auf diese Weise in den Abstand 28 zwischen dem Einleger 8 und dem Schaum 24 gefüllt, sodass der Klebstoff 32 eine (Klebstoff-) Schicht 34 zwischen dem Einleger 8 und dem Schaum 24 bildet.

Außerdem füllt der Klebstoff 32 die Hohlräume in dem Fasermaterial 48 für die Deckschicht 4 sowie in dem Fasermaterial 46 für die weitere Schicht 10.

In einem Aushärteschritt härtet der Klebstoff 32 aus. Vorzugsweise werden in dem Aushärteschritt der Druck sowie die Temperatur innerhalb des Werkzeugs 44 erhöht. Üblicherweise polymerisiert der Klebstoff 32 in dem Aushärteschritt.

Der ausgehärtete Klebstoff 32 bildet mit dem darin eingebetteten Fasermaterial 48 die Deckschicht 4. Außerdem bildet der ausgehärtete Klebstoff 32 mit dem darin eingebetteten Fasermaterial 46 die weitere Schicht 10.

Der ausgehärtete Klebstoff 32 der Deckschicht 4 und der weiteren Schicht 10 bildet einen Stoffschluss mit dem Klebstoff 32 in dem Abstand 28.

Anstatt des Infusionsverfahrens kann auch ein anderes Verfahren zur Einfüllung des Klebstoffs 32 verwendet werden. Beispielsweise kann auch das Handlaminatverfahren verwendet werden.

Weiter ist es prinzipiell möglich, anstatt des Fasermaterials 46, 48 für die Deckschicht 4 und für die weitere Schicht 10 jeweils Prepreg-Material zu verwenden. In dem jeweiligen Prepreg-Material ist das Fasermaterial mit einem Klebstoff impregniert. D. h., das jeweiliege Prepreg-Material ist ein vorimpregniertes Faserhalbzeug. Der Klebstoff 32 kann dann innerhalb des Werkzeugs 44, insbesondere in dem Aushärteschritt, flüssig werden und übrige Hohlräume befüllen, wie zum Beispiel den Abstand 28. Mit fortschreitender Zeit beginnt, insbesondere temperatur- und druckabhängig, eine Polymerisationsreaktion und der Klebstoff 32 härtet aus. Dieses Verfahren ist auch als Prepreg-Autoklav-Verfahren bekannt.

Die Form des hergestellten Sandwichelements 2 ist durch die Form des Werkzeugs 44 vorgegeben. Das Sandwichelement 2 kann eben sein. Weiter kann das Sandwichelement 2 gekrümmt und/oder dreidimensional ausgeformt sein. Insbesondere ist das Sandwichelement 2 ein Formteil.

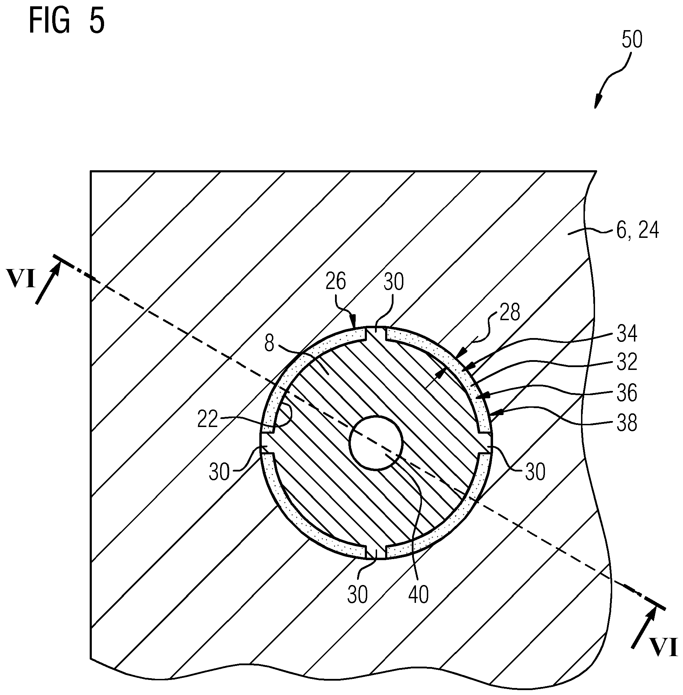

FIG 5 zeigt einen Schnitt durch ein zweites Sandwichelement 50. Die nachfolgende Beschreibung beschränkt sich im Wesentlichen auf die Unterschiede zum Ausführungsbeispiel aus den Figuren 1 bis 3, auf das bezüglich gleichbleibender Merkmale und Funktionen verwiesen wird. Im Wesentlichen gleichbleibende Elemente werden grundsätzlich mit dem gleichen Bezugszeichen bezeichnet und nicht erwähnte Merkmale sind in das folgende Ausführungsbeispiel übernommen, ohne dass sie erneut beschrieben sind.

In dem zweiten Sandwichelement 50 basiert der Einleger 8 auf der Form eines Zylinders. Weiter basiert die erste Fläche 18 des Einlegers 8 auf der Form eines Kreises. Außerdem sind die Seitenflächen 22 des Einlegers 8 als eine einzige, zusammenhängende Seitenfläche 22, nämlich als Mantelfläche des Zylinders, ausgebildet.

Auch in diesem Beispiel ist der Einleger 8 einteilig mit den Abstandshaltern 30 ausgebildet. Die Abstandshalter 30 sind als Vorsprünge an den Seitenflächen 22 des Einlegers 8 ausgebildet. Aufgrund der Abstandshalter 30 wird eine Rotationssymmetrie des Einlegers 8 gebrochen bzw. verhindert.

In FIG 5 ist weiterhin eine Schnittebene VI-VI in Form einer Strich-Punkt-Linie dargestellt.

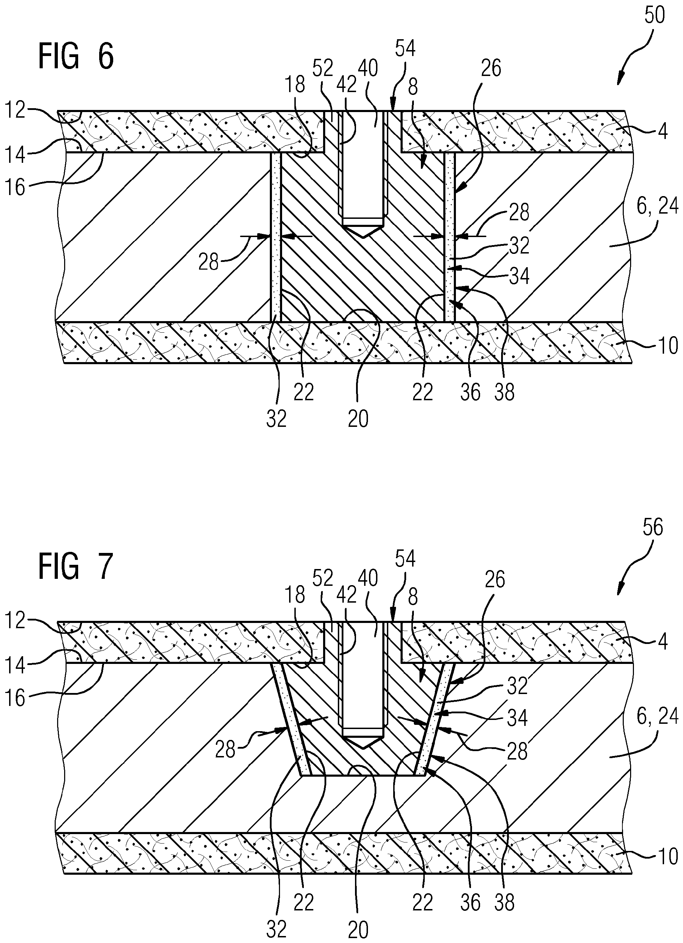

FIG 6 zeigt einen Schnitt durch das zweite Sandwichelement 50 aus FIG 5 entlang der Schnittebene VI-VI.

Der Einleger 8 umfasst in diesem Beispiel einen Vorsprung 52, welcher auf der ersten Fläche 18 des Einlegers 8 positioniert ist. In diesem Beispiel bilden die Deckschicht 4 und der Vorsprung 52 des Einlegers 8 eine gemeinsame plane Oberfläche 54.

Prinzipiell kann der Vorsprung 52 des Einlegers 8 auch über die Deckschicht 4 hinausragen. Dann bilden der Vorsprung 52 des Einlegers 8 und die Deckschicht 4 keine gemeinsame plane Oberfläche 54.

Die Öffnung 40 des Einlegers 8 erstreckt sich in diesem Beispiel zumindest teilweise durch den Vorsprung 52. Auch in diesem Beispiel ist die Öffnung 40 als Sackloch ausgebildet.

Prinzipiell könnte der Einleger 8 des zweiten Sandwichselements 50 aus FIG 5 und 6 auch auf einer anderen Form basieren.

In FIG 7 ist beispielhaft ein Schnitt durch ein drittes Sandwichelement 56 gezeigt. Die nachfolgende Beschreibung beschränkt sich im Wesentlichen auf die Unterschiede zum Ausführungsbeispiel aus den Figuren 5 und 6, auf das bezüglich gleichbleibender Merkmale und Funktionen verwiesen wird. Im Wesentlichen gleichbleibende Elemente werden grundsätzlich mit dem gleichen Bezugszeichen bezeichnet und nicht erwähnte Merkmale sind in das folgende Ausführungsbeispiel übernommen, ohne dass sie erneut beschrieben sind.

In dem dritten Sandwichelement 56 basiert der Einleger 8 auf der Form eines Kegels, insbesondere auf der Form eines Kegelstumpfes. Weiter basiert die erste Fläche 18 des Einlegers 8 auf der Form eines Kreises. Die zweite Fläche 20 des Einlegers 8 basiert ebenfalls auf der Form eines Kreises, ist jedoch kleiner ausgebildet als die erste Fläche 18.

Außerdem erstreckt sich der Einleger 8 in Dickenrichtung der Kernschicht 6 nur teilweise durch die Kernschicht 6. Auf diese Weise ist die zweite Fläche 20 des Einlegers 8 mit der Kernschicht 6 verbunden. In diesem Beispiel ist die zweite Fläche 20 des Einlegers 8 mit der Kernschicht 6 formschlüssig verbunden. Prinzipiell wäre es jedoch auch möglich, dass zwischen der zweiten Fläche 20 des Einlegers 8 und der Kernschicht 6 ein Abstand 28 positioniert ist, welcher ebenfalls mit Klebstoff 32 gefüllt ist.

FIG 8 zeigt ein viertes Sandwichelement 58. Die nachfolgende Beschreibung beschränkt sich im Wesentlichen auf die Unterschiede zum Ausführungsbeispiel aus den Figuren 1 bis 4, auf das bezüglich gleichbleibender Merkmale und Funktionen verwiesen wird. Im Wesentlichen gleichbleibende Elemente werden grundsätzlich mit dem gleichen Bezugszeichen bezeichnet und nicht erwähnte Merkmale sind in das folgende Ausführungsbeispiel übernommen, ohne dass sie erneut beschrieben sind.

In FIG 8 sind die Abstandshalter 30 nicht einteilig mit dem Einleger 8 ausgeführt, sondern separat. Dies wäre prinzipiell auch bei den zuvor genannten Ausführungsbeispielen in analoger Weise möglich. Ferner wäre es prinzipiell möglich, die Abstandshalter 30 in FIG 8 einteilig mit dem Einleger 8 auszuführen.

In diesem Beispiel sind die Abstandshalter 30 aus einem Kunststoff, welcher mit dem ausgehärteten Klebstoff 32 in dem Abstand 28 einen Stoffschluss bildet.

In FIG 8 weist der Einleger 8 mehrere Aussparungen 60 auf, in welche die Abstandshalter 30, insbesondere teilweise, eingelegt sind. Auf diese Weise kann eine sichere Positionierung der Abstandshalter 30, insbesondere ohne Verrutschen, gewährleistet werden.

Die Kernschicht 6 umfasst einen Schaum 24, welcher unter Verwendung von Ausnehmungen 62 strukturiert ist. Die Ausnehmungen 62 sind mit demselben, insbesondere aushärtbaren, Klebstoff 32 gefüllt. Die Ausnehmungen 62 bilden in diesem Beispiel eine hexagonale Struktur 64. Auf diese Weise ist der Schaum 24 als Wabenschaum ausgeführt.

Der Klebstoff 32 in den Ausnehmungen 62 bildet mit dem Klebstoff 32 in dem Abstand 28 (zwischen dem Einleger 8 und dem Schaum 24) eine stoffschlüssige (Klebstoff-)Struktur 38. Auf diese Weise wird eine besonders stabile Klebstoffstruktur 38 gebildet.

Ferner ist auf diese Weise der Einleger 8 besonders gut in der Kernschicht 6 verankert.

Bei der Herstellung des Sandwichelements 58 (in Analogie zu FIG 4) werden alle Hohlräume mit Klebstoff 32 gefüllt, sodass auch die Ausnehmungen 62 in dem Schaum 24 mit Klebstoff 32 gefüllt werden.

In FIG 8 sind außerdem eine Schnittebene IX-IX in Form einer Strich-Punkt-Linie dargestellt.

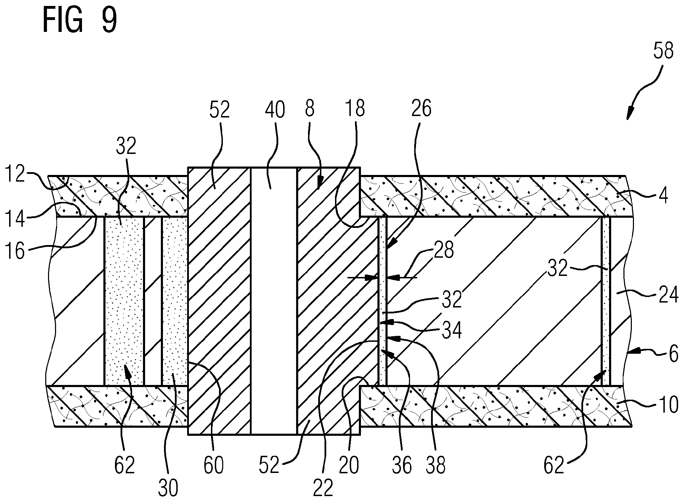

FIG 9 zeigt einen Schnitt durch das Sandwichelement 58 aus FIG 8 entlang der Schnittebene IX-IX.

In diesem Beispiel weist der Einleger 8 an der ersten und an der zweiten Fläche 18, 20 jeweils einen Vorsprung 52 auf. In diesem Beispiel ragt der Vorsprung 52, welcher an der ersten Fläche 18 positioniert ist, über die Deckschicht 4 hinaus. Auch der Vorsprung 52, welcher an der zweiten Fläche 20 positioniert ist, ragt über weitere Schicht 10 hinaus.

Die Öffnung 40 erstreckt sich durch den gesamten Einleger 8. Weiter erstreckt sich die Öffnung durch das gesamte Sandwichelement 58. Insbesondere ist die Öffnung 40 als Durchgangsloch ausgebildet.

Der Einleger 8 des Sandwichelements 58 (in FIG 8 und FIG 9) könnte prinzipiell auch eine andere Form aufweisen, beispielsweise eine Form analog wie in einem der zuvor genannten Ausführungsbeispiele.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Herstellung eines Sandwichelements (2, 50, 56, 58) mit zumindest einer ersten Deckschicht (4), einer Kernschicht (6) und einem Einleger (8),
wobei in dem Sandwichelement (2, 50, 56, 58) eine Verbindungsfläche (16) der Kernschicht (6) mit einer Verbindungsfläche (14) der Deckschicht (4) verbunden ist sowie eine erste Fläche (18) des Einlegers (8) zumindest teilweise mit der Verbindungsfläche (14) der Deckschicht (4) verbunden ist, **dadurch gekennzeichnet, dass**
die Kernschicht (6) einen Schaum (24) aufweist,
bei welchem Verfahren
- zumindest in den Schaum (24) der Kernschicht (6) eine Aussparung (26) eingebracht wird,
- der Einleger (8) mit einem Abstand (28) zum Schaum (24) in der Aussparung (26) positioniert wird, bei der Positionierung des Einlegers (8) zumindest ein Abstandshalter (30) zwischen dem Einleger (8) und dem Schaum (24) platziert wird und der Einleger (8) zumindest eine Aussparung (60) aufweist, in welche der Abstandshalter (30), insbesondere teilweise, eingelegt wird,
- in den Abstand (28) aushärtbarer Klebstoff (32) gefüllt wird, wobei der Klebstoff (32) eine Schicht (34) zwischen dem Einleger (8) und dem Schaum (24) bildet, und
- der Klebstoff (32) aushärtet.

2. Verfahren nach Anspruch 1,
**dadurch gekennzeichnet, dass**
der Klebstoff (32) den Einleger (8) an seinen Seitenflächen (22), welche im Winkel zur ersten Fläche (18) des Einlegers (8) stehen, zumindest im Wesentlichen umschließt.

3. Verfahren nach Anspruch 1 oder 2,
**dadurch gekennzeichnet, dass**
der Klebstoff (32) in dem Abstand (28) eine Schicht (34) bildet, welche mindestens 1,0 mm, insbesondere mindestens 2,0 mm, dick ist.

4. Verfahren nach einem der AnsprÜche 1 bis 3,
**dadurch gekennzeichnet, dass**
der Abstandshalter (30) aus einem Kunststoff ist, welcher mit dem ausgehärteten Klebstoff (32) in dem Abstand (28) einen Stoffschluss bildet.

5. Verfahren nach einem der vorhergehenden Ansprüche, **dadurch gekennzeichnet, dass**
der Schaum (24) unter Verwendung von Ausnehmungen (62) strukturiert ist, welche Ausnehmungen (62) mit demselben, insbesondere aushärtbaren, Klebstoff (32) gefüllt werden.

6. Verfahren nach Anspruch 5,
**dadurch gekennzeichnet, dass**
der Klebstoff (32) in den Ausnehmungen (62) mit dem Klebstoff (32) in dem Abstand (28) eine stoffschlüssige Struktur bildet.

7. Verfahren nach einem der vorhergehenden Ansprüche, **dadurch gekennzeichnet, dass**
die Verbindungsfläche (16) der Kernschicht (6) mit der Verbindungsfläche (14) der Deckschicht (4) unter Verwendung desselben Klebstoffs (32) verbunden wird und
die erste Fläche (18) des Einlegers (8) unter Verwendung desselben Klebstoffs (32) zumindest teilweise mit der Verbindungsfläche (14) der Deckschicht (4) verbunden wird.

8. Verfahren nach einem der vorhergehenden Ansprüche, **dadurch gekennzeichnet, dass**
die Deckschicht (4) ein Fasermaterial (46, 48) umfasst, welches in denselben Klebstoff (32) eingebettet ist oder wird.

9. Sandwichelement (2, 50, 56, 58) mit zumindest einer ersten Deckschicht (4), einer Kernschicht (6) und einem Einleger (8), wobei in dem Sandwichelement (2, 50, 56, 58) eine Verbindungsfläche (16) der Kernschicht (6) mit einer Verbindungsfläche (14) der Deckschicht (4) verbunden ist sowie eine erste Fläche (18) des Einlegers (8) zumindest teilweise mit der Verbindungsfläche (14) der Deckschicht (4) verbunden ist und wobei die Kernschicht (6) einen Schaum (24) aufweist, **dadurch gekennzeichnet, dass**
- zumindest der Schaum (24) der Kernschicht (6) eine Aussparung (26) aufweist,
- der Einleger (8) mit einem Abstand (28) zum Schaum (24) in der Aussparung (26) positioniert ist, zumindest ein Abstandshalter (30) zwischen dem Einleger (8) und dem Schaum (24) platziert ist und der Einleger (8) zumindest eine Aussparung (60) aufweist, in welche der Abstandshalter (30), insbesondere teilweise, eingelegt ist und
- in den Abstand (28) ausgehärteter Klebstoff (32) platziert ist, wobei der Klebstoff (32) eine Schicht (34) zwischen dem Einleger (8) und dem Schaum (24) bildet.

10. Sandwichelement (2, 50, 56, 58) nach Anspruch 9,
**dadurch gekennzeichnet, dass**
der Abstandshalter (30) stoffschlüssig mit dem ausgehärteten Klebstoff (32) in dem Abstand (28) ausgebildet ist.

11. Sandwichelement (2, 50, 56, 58) nach einem der Ansprüche 9 oder 10,
**dadurch gekennzeichnet, dass**
der Einleger (8) eine Öffnung (40) aufweist, welche von außerhalb des Sandwichelements (2, 50, 56, 58) zugänglich ist.

12. Sandwichelement (2, 50, 56, 58) nach einem der Ansprüche 9 bis 11,
wobei das Sandwichelement (2, 50, 56, 58) als Formteil ausgebildet ist.

## Claims

1. Method for producing a sandwich element (2, 50, 56, 58) having at least a first cover layer (4), a core layer (6) and an insert (8),
wherein, in the sandwich element (2, 50, 56, 58), a connection face (16) of the core layer (6) is connected to a connection face (14) of the cover layer (4) and a first face (18) of the insert (8) is connected at least partially to the connection face (14) of the cover layer (4),
**characterized in that**
the core layer (6) comprises a foam (24),
in which method
- a recess (26) is introduced at least into the foam (24) of the core layer (6),
- the insert (8) is positioned in the recess (26) with a gap (28) in relation to the foam (24), during the positioning of the insert (8) at least one spacer (30) is placed between the insert (8) and the foam (24) and the insert (8) has at least one recess (60), into which the spacer (30) is inserted, in particular partially inserted,
- curable adhesive (32) is filled into the gap (28), wherein the adhesive (32) forms a layer (34) between the insert (8) and the foam (24), and
- the adhesive (32) cures.

2. Method according to Claim 1,
**characterized in that**
the adhesive (32) at least substantially encloses the insert (8) at its side faces (22), which are at an angle to the first face (18) of the insert (8).

3. Method according to Claim 1 or 2,
**characterized in that**
the adhesive (32) in the gap (28) forms a layer (34) which is at least 1.0 mm, in particular at least 2.0 mm, thick.

4. Method according to one of Claims 1 to 3,
**characterized in that**
the spacer (30) is made of a plastics material, which forms a material bond with the cured adhesive (32) in the gap (28).

5. Method according to one of the preceding claims, **characterized in that**
the foam (24) is structured using recesses (62), which recesses (62) are filled with the same, in particular curable, adhesive (32).

6. Method according to Claim 5,
**characterized in that**
the adhesive (32) in the recesses (62) forms a materially bonded structure with the adhesive (32) in the gap (28).

7. Method according to one of the preceding claims, **characterized in that**
the connection face (16) of the core layer (6) is connected to the connection face (14) of the cover layer (4) using the same adhesive (32) and
the first face (18) of the insert (8) is connected at least partially to the connection face (14) of the cover layer (4) using the same adhesive (32).

8. Method according to one of the preceding claims, **characterized in that**
the cover layer (4) comprises a fibre material (46, 48), which has been or is embedded in the same adhesive (32).

9. Sandwich element (2, 50, 56, 58) having at least a first cover layer (4), a core layer (6) and an insert (8), wherein, in the sandwich element (2, 50, 56, 58), a connection face (16) of the core layer (6) is connected to a connection face (14) of the cover layer (4) and a first face (18) of the insert (8) is connected at least partially to the connection face (14) of the cover layer (4) and wherein the core layer (6) comprises a foam (24),
**characterized in that**
- at least the foam (24) of the core layer (6) has a recess (26),
- the insert (8) is positioned in the recess (26) with a gap (28) in relation to the foam (24), at least one spacer (30) is placed between the insert (8) and the foam (24) and the insert (8) has at least one recess (60), into which the spacer (30) is inserted, in particular partially inserted, and
- curable adhesive (32) is placed in the gap (28), wherein the adhesive (32) forms a layer (34) between the insert (8) and the foam (24).

10. Sandwich element (2, 50, 56, 58) according to Claim 9, **characterized in that**
the spacer (30) is materially bonded to the cured adhesive (32) in the gap (28).

11. Sandwich element (2, 50, 56, 58) according to either of Claims 9 and 10,
**characterized in that**
the insert (8) has an opening (40), which is accessible from outside the sandwich element (2, 50, 56, 58).

12. Sandwich element (2, 50, 56, 58) according to one of Claims 9 to 11,
wherein the sandwich element (2, 50, 56, 58) is in the form of a shaped part.

## Revendications

1. Procédé de production d'un élément (2, 50, 56, 58) sandwich ayant au moins une première couche (4) de recouvrement, une couche (6) d'âme et une insertion (8),
dans lequel, dans l'élément (2, 50, 56, 58) sandwich, une surface (16) de liaison de la couche (6) d'âme est reliée à une surface (14) de liaison de la couche (4) de recouvrement, ainsi qu'une première surface (18) de l'insertion (8) est reliée au moins en partie à la surface (14) de liaison de la couche (4) de recouvrement, **caractérisé en ce que**
la couche (6) d'âme a une mousse (24),
procédé dans lequel
- on ménage un évidement (26) au moins dans la mousse (24) de le couche (6) d'âme,
- on met l'insertion (8) en position à une distance (28) de la mousse (24) dans l'évidement (26), dans la mise en position de l'insertion (8), on place au moins un écarteur (30) entre l'insertion (8) et la mousse (24) et l'insertion (8) a au moins un évidement (60), dans lequel on insère, notamment en partie, l'écarteur (30),
- on remplit la distance (28) de colle (32) durcissable, la colle (32) formant une couche (34) entre l'insertion (8) et la mousse (24), et
- la colle (32) durcit.

2. Procédé suivant la revendication 1,
**caractérisé en ce que** la colle (32) entoure, au moins sensiblement, l'insertion (8) sur ses surfaces (22) latérales, qui font un angle avec la première surface (18) de l'insertion (8).

3. Procédé suivant la revendication 1 ou 2,
**caractérisé en ce que** la colle (32) forme dans la distance (28), une couche (34), qui a une épaisseur d'au moins 1,0 mm, notamment d'au moins 2,0 mm.

4. Procédé suivant l'une des revendications 1 à 3,
**caractérisé en ce que** l'écarteur (30) est en une matière plastique, qui forme une liaison à coopération de matière avec la colle (32) durcie dans la distance (28).

5. Procédé suivant l'une des revendications précédentes, **caractérisé en ce que** la mousse (24) est structurée en utilisant des évidements (62), lesquels évidements (62) sont emplis de la même colle (32), notamment durcissable.

6. Procédé suivant la revendication 5,
**caractérisé en ce que** la colle (32) dans les évidements (62) forme une structure à coopération de matière avec la colle (32) dans la distance (28).

7. Procédé suivant l'une des revendications précédentes, **caractérisé en ce que** l'on relie en utilisant la même colle (32), la surface (16) de liaison à la couche (6) d'âme à la surface (14) de liaison à la couche (4) de recouvrement et
on relie la première surface (18) de l'insertion (8) en utilisant la même colle (32) au moins en partie à la surface (14) de liaison de la couche (4) de recouvrement.

8. Procédé suivant l'une des revendications précédentes, **caractérisé en ce que** la couche (4) de recouvrement comprend une matière (46, 48) fibreuse, qui est incorporée ou que l'on incorpore dans la même colle (32).

9. Elément (2, 50, 56, 58) sandwich comprenant au moins une première couche (4) de recouvrement, une couche (6) d'âme et une insertion (8), dans lequel, dans l'élément (2, 50, 56, 58) sandwich, une surface (16) de liaison de la couche (6) d'âme est reliée à une surface (14) de liaison de la couche (4) de recouvrement, ainsi qu'une première surface (18) de l'insertion (8) est reliée au moins en partie à la surface (14) de liaison de la couche (4) de recouvrement, et dans lequel la couche (6) d'âme a une mousse (24), **caractérisé en ce que**
- au moins la mousse (24) de la couche (6) d'âme a un évidement (26),
- l'insertion (8) est mise en position à une distance (28) de la mousse (24) dans l'évidement (26), au moins un écarteur (30) étant placé entre l'insertion (8) et la mousse (24) et l'insertion (8) a au moins un évidement (60), dans lequel l'écarteur (30) est inséré, notamment en partie, et
- de la colle (32) durcie est placée dans la distance (28), la colle (32) formant une couche (34) entre l'insertion (8) et la mousse (24).

10. Elément (2, 50, 56, 58) sandwich suivant la revendication 9, **caractérisé en ce que** l'écarteur (30) est constitué à coopération de matière avec la colle (32) durcie dans la distance (28).

11. Elément (2, 50, 56, 58) sandwich suivant l'une des revendications 9 ou 10,
**caractérisé en ce que** l'insertion (8) a une ouverture (40), qui est accessible de l'extérieur de l'élément (2, 50, 56, 58) sandwich.

12. Elément (2, 50, 56, 58) sandwich suivant l'une des revendications 9 à 11,
dans lequel l'élément (2, 50, 56, 58) sandwich est constitué sous la forme d'une pièce moulée.
